# FASCICULE DE BREVET EUROPEEN

(11) **EP 3 557 740 B1**
(45) Date de publication et mention de la délivrance du brevet: **11.11.2020**
(21) Numéro de dépôt: 19167171.8
(22) Date de dépôt: 03.04.2019
(51) Int. Cl.: H02M 1/36, H02J 1/10

(54) **PROCÉDÉ DE DÉMARRAGE D'UN SYSTÈME D'ALIMENTATION**
VERFAHREN ZUM STARTEN EINES STROMVERSORGUNGSSYSTEMS
METHOD FOR STARTING A POWER SUPPLY SYSTEM

(30) Priorité: 17.04.2018 FR 1853363
(43) Date de publication de la demande: 23.10.2019
(73) Titulaire: STMicroelectronics S.r.l., 20864 Agrate Brianza (MB) (IT); STMicroelectronics (ALPS) SAS, 38000 Grenoble (FR)
(72) Inventeur: DRUILHE, Francois, 38420 LE VERSOUD (FR); ARNO, Patrik, 38360 SASSENAGE (FR); INGLESE, Alessandro, 95030 SAN PIETRO CLARENZA (CT) (IT); CARRANO, Michele Alessandro, 95129 CATANIA (IT)
(74) Mandataire: Cabinet Beaumont

(56) Documents cités:
- US-A1- 2005 242 792
- US-A1- 2013 162 233
- US-A1- 2015 076 906

## Description

### Domaine

La présente demande concerne les systèmes d'alimentation de circuits et plus particulièrement des circuits comprenant une partie numérique et une partie analogique.

### Exposé de l'art antérieur

Divers types de produits comprennent des circuits numériques et des circuits analogiques, et plus particulièrement des circuits analogiques d'émission et/ou de réception d'ondes radio. Il s'agit par exemple de tous les appareils (téléphones, tablettes, imprimantes, etc.) pouvant comprendre une connexion radiofréquence (Bluetooth, wifi, etc.). Ces produits sont souvent des appareils portables pour lesquels la problématique de la consommation d'énergie est primordiale.

Les systèmes d'alimentation de tels appareils comprennent généralement des convertisseurs dc/dc et des régulateurs linéaires, comme montré par exemple par le document US-A-2015/076906. Les régulateurs linéaires assurent un changement de tension rapide au niveau des circuits numériques sans provoquer de changement majeur sur les circuits analogiques. Les convertisseurs dc/dc assurent la conservation de l'énergie fournie tout en abaissant ou élevant la tension. Ils ont donc une meilleure efficacité que des régulateurs linéaires. Les convertisseurs dc/dc consomment cependant plus que les régulateurs linéaires.

### Résumé

Un mode de réalisation prévoit un procédé de démarrage d'un système d'alimentation alimentant des circuits numériques et des circuits analogiques, comprenant :
un premier noeud adapté à être alimenté soit directement par une source d'application de tension soit à travers une alimentation à découpage,
un premier régulateur linéaire couplé entre les circuits numériques et le premier noeud,
un premier comparateur adapté à comparer la valeur de la tension fournie par la source avec un premier seuil,
un deuxième comparateur adapté à comparer la tension sur le premier noeud avec un deuxième seuil,
le procédé d'utilisation comprenant un mode de fonctionnement dans lequel le premier noeud est alimenté par l'alimentation à découpage, dans lequel le premier régulateur est en fonctionnement et dans lequel lesdits au moins une mémoire et un circuit logique sont alimentés, le démarrage du système comprenant :
   démarrer la source ;
   lancer l'initialisation de l'alimentation à découpage ;
   lorsque la tension fournie par la source est supérieure au premier seuil, connecter le noeud avec la source ;
   démarrer le premier régulateur ;
   lorsque la tension au noeud d'entrée du premier régulateur est supérieure au deuxième seuil, démarrer les circuits numériques ; et
   lorsque l'alimentation à découpage est initialisée, connecter le premier noeud à la sortie de l'alimentation à découpage.

Selon un mode de réalisation, l'alimentation à découpage est alimentée par la source.

Selon un mode de réalisation, le premier noeud est couplé à la sortie de l'alimentation à découpage par une inductance.

Selon un mode de réalisation, le noeud est adapté à être alimenté par un élément de stockage d'énergie.

Selon un mode de réalisation, l'élément de stockage d'énergie est une capacité couplée entre le premier noeud et la masse.

Selon un mode de réalisation, les circuits numériques comprennent au moins une mémoire et au moins un circuit logique ou une unité de traitement.

Selon un mode de réalisation, le procédé comprend un mode de fonctionnement dans lequel le premier noeud est alimenté par l'élément de stockage d'énergie, le premier régulateur n'est pas en fonctionnement, le deuxième régulateur est en fonctionnement, et lesdits au moins une mémoire et un circuit logique sont alimentés.

Selon un mode de réalisation, le procédé comprend un mode de fonctionnement dans lequel le premier noeud est alimenté par l'élément de stockage d'énergie, le premier régulateur n'est pas en fonctionnement, le deuxième régulateur est en fonctionnement, ladite au moins une mémoire est alimentée, et ledit au moins un circuit logique n'est pas alimenté.

Selon un mode de réalisation, le procédé comprend un deuxième régulateur linéaire couplé entre la source et le noeud de sortie du premier régulateur.

Selon un mode de réalisation, les circuits analogiques comprennent des circuits d'émission et/ou de réception d'ondes radio.

Selon un mode de réalisation, le procédé comprend un troisième régulateur linéaire couplé entre le premier noeud et les circuits analogiques.

Selon un mode de réalisation, le démarrage du système comprend une étape durant laquelle le premier noeud est alimenté par la source, puis une étape durant laquelle le premier noeud est alimenté par la sortie de l'alimentation à découpage.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation schématique d'un mode de réalisation d'un système d'alimentation ;
la figure 2 est un chronogramme illustrant le démarrage du système de la figure 1 ;
la figure 3 est un chronogramme illustrant un mode de fonctionnement du système de la figure 1 ;
la figure 4 est un chronogramme illustrant un autre mode de fonctionnement du système de la figure 1 ;
la figure 5 est un chronogramme illustrant un autre mode de fonctionnement du système de la figure 1 ; et
la figure 6 est un chronogramme illustrant un autre mode de fonctionnement du système de la figure 1.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des éléments concernés dans les figures. Sauf précision contraire, les expressions "approximativement", "sensiblement", "environ", et "de l'ordre de" signifient à 10 % près, de préférence à 5 % près.

Sauf précision contraire, lorsque l'on fait référence à deux éléments connectés entre eux, cela signifie que ces éléments sont directement connectés sans élément intermédiaire autre que des conducteurs, et lorsque l'on fait référence à deux éléments reliés ou couplés entre eux, cela signifie que ces deux éléments peuvent être directement reliés (connectés) ou reliés par l'intermédiaire d'un ou plusieurs autres éléments.

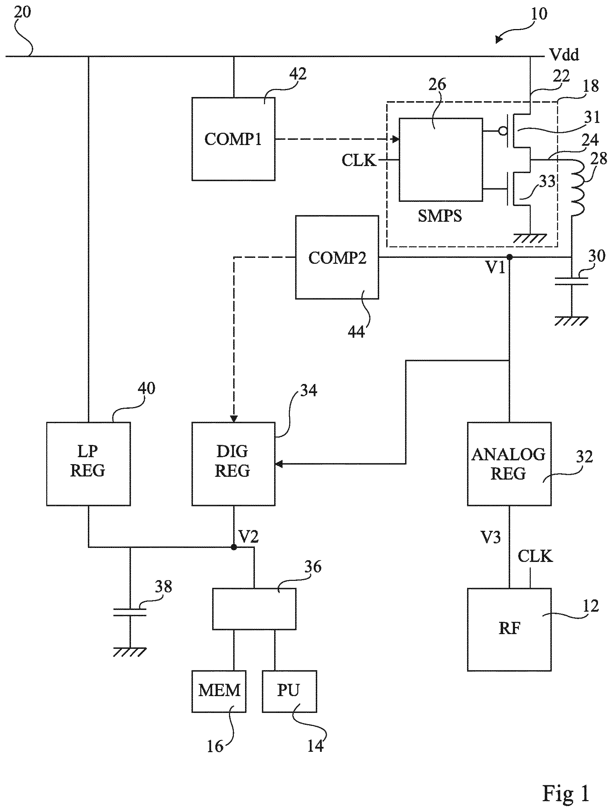

La figure 1 est une représentation schématique, sous forme de blocs, d'un mode de réalisation d'un système d'alimentation 10. Plus précisément, le système comprend des circuits analogiques, par exemple des circuits 12 (RF) d'émission et/ou de réception radiofréquence, qu'il alimente. Le système comprend aussi des circuits numériques, par exemple au moins une unité de traitement 14 (PU) et/ou des circuits logiques et au moins une mémoire 16 (MEM), qu'il alimente. La mémoire 16 peut comprendre une ou plusieurs mémoires volatiles et une ou plusieurs mémoires non volatiles.

Par système d'alimentation, on entend un système comprenant des charges à alimenter et les circuits alimentant ces charges.

Le système 10 comprend un convertisseur dc/dc, par exemple une alimentation à découpage 18 (SMPS). Le convertisseur 18 est connecté à une source d'application de tension Vdd représentée par un rail 20. Le convertisseur reçoit donc à son entrée 22 la tension Vdd. Le convertisseur reçoit, de plus, un signal d'horloge CLK.

Un inconvénient d'un tel convertisseur est qu'il nécessite une période d'initialisation relativement longue, par exemple comprise entre 10 et 100 µs, durant laquelle la tension de sortie n'est pas suffisante pour alimenter les circuits.

La sortie 24 du convertisseur 18 est couplée à un noeud V1 par une inductance 28. Le noeud V1 est de plus couplé à la masse par une capacité 30. La capacité 30 est par exemple comprise entre environ 1 et 10 µF. L'inductance 28 est par exemple comprise entre 1 et 22 µH.

Le convertisseur 18 comprend deux interrupteurs 31 et 33 commandés par un circuit de commande 26. Dans l'exemple de la figure 1, les interrupteurs 31 et 33 sont des transistors MOS, par exemple de types opposés. L'interrupteur 31 est connecté entre l'entrée 22 et la sortie 24, c'est-à-dire entre la source 20 et l'inductance 28. L'interrupteur 33 est connecté entre la masse et la sortie 24.

En fonctionnement normal du convertisseur 18, l'ouverture et la fermeture des interrupteurs 31 et 33 est opposée et périodique. La tension de la source 20 est ainsi découpée, et rendue périodique, par le convertisseur 18. La tension de la sortie 24 est donc alternativement égale à la valeur de la tension Vdd et à la valeur de la masse. Quand l'interrupteur 31 est fermé et que l'interrupteur 33 est ouvert, le courant s'accumule dans l'inductance 28. Quand l'interrupteur 33 est fermé et que l'interrupteur 31 est ouvert, la diode du transistor MOS constituant l'interrupteur 31 sert de roue libre et le courant se déplace vers le noeud V1.

Dans certains modes de fonctionnement, l'interrupteur 31 peut être maintenu fermé et l'interrupteur 33 peut être maintenu ouvert de manière à coupler le noeud V1 à la source 20 de manière constante. Dans d'autres modes de fonctionnement, les interrupteurs 31 et 33 peuvent être maintenus ouverts de manière à isoler électriquement l'inductance 28 de la source 20, auquel cas le noeud V1 est alimenté par la charge stockée dans la capacité 30.

Le noeud V1 peut donc être alimenté, selon le mode de fonctionnement, par la source 20, directement ou de manière découpée par le convertisseur 18, ou être alimenté par la charge stockée dans la capacité 30.

Le système 10 comprend un régulateur linéaire 32 (ANALOG REG), dont l'entrée est connectée au noeud V1 et dont la sortie, fournissant une tension V3, est connectée aux circuits analogiques 12. Les circuits 12 reçoivent aussi un signal d'horloge, de préférence le signal d'horloge CLK reçu par le convertisseur 18 de manière à réduire les perturbations analogiques générées par le circuit 18.

A titre de variante, le régulateur 32 peut ne pas être présent. Les circuits analogiques sont alors directement alimentés par la tension du noeud V1.

Le système 10 comprend de plus un régulateur 34 (DIG REG), dont l'entrée est connectée au noeud V1 et dont la sortie est connectée à un noeud V2. Le noeud V2 est couplé aux circuits numériques (mémoire 16 et circuit logique 14) par un circuit 36. Le circuit 36 est par exemple constitué de plusieurs interrupteurs et est adapté à connecter, ou non, le circuit logique 14 et la mémoire 16 au noeud V2. En effet, dans certains modes de fonctionnement, on peut vouloir alimenter le circuit logique et la mémoire, et, dans d'autres modes de fonctionnement, on peut vouloir alimenter uniquement les mémoires, qui peuvent être volatiles, de manière à conserver les données mémorisées.

A titre de variante, le noeud V2 peut être, de plus, couplé à la masse par une capacité 38.

Le système 10 peut aussi comprendre un régulateur linéaire 40 (LP REG), dont l'entrée est connectée à la source 20, et dont la sortie est connectée au noeud V2.

Le système comprend de plus un comparateur 42 (COMP1) adapté à comparer la valeur de la tension fournie par la source 20 à un premier seuil. Le premier seuil est par exemple égal à 2,4 V pour une source 20 pouvant fournir en fonctionnement normal une tension d'approximativement 3,3 V. Le résultat de cette comparaison peut être utilisé pour déterminer si la tension Vdd est suffisamment élevée pour que le démarrage du convertisseur 18 ait un intérêt. En effet, l'utilisation du convertisseur 18 consomme plus d'énergie qu'un régulateur linéaire pour permettre de modifier la tension en conservant l'énergie reçue en entrée. Si la tension Vdd est inférieure au premier seuil et que la diminution de tension à effectuer est faible, l'utilisation du convertisseur 18 n'est pas efficace de manière énergétique et il est préférable d'arrêter le convertisseur 18.

Le système 10 comprend, de plus, un comparateur 44 (COMP2) adapté à comparer la valeur de la tension sur le noeud V1 à un deuxième seuil. Le deuxième seuil est par exemple sensiblement égal à 1,4 V. Le résultat de cette comparaison peut être utilisé pour déterminer si le régulateur 34 peut être démarré, c'est-à-dire si la tension sur le noeud V1 peut permettre le fonctionnement des circuits numériques.

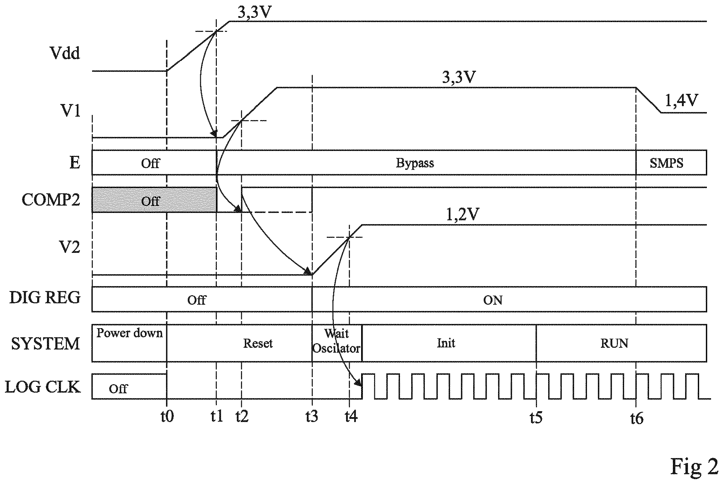

La figure 2 est un chronogramme illustrant le démarrage du système de la figure 1. Le chronogramme de la figure 2 et ceux des figures suivantes représentent des exemples de variations de :
- la tension Vdd fournie par la source 20 ;
- la tension sur le noeud V1, désignée par la suite par l'expression "tension V1" ;
- un état E du convertisseur 18 ;
- le résultat du comparateur 44 (COMP2), qui prend un état haut lorsque la tension V1 est au-dessus du deuxième seuil et un état bas lorsque la tension V1 est au-dessous du deuxième seuil ;
- la tension sur le noeud V2, désignée par la suite par l'expression "tension V2" ;
- l'état du régulateur linéaire 34 (DIG REG) ;
- l'état du système (SYSTEM) ; et
- le signal d'horloge des circuits numériques (LOG CLK) .

Avant un instant t0, le système est éteint (Power down) et l'ensemble des composants est éteint (Off). En particulier, les tensions Vdd, V1 et V2 sont nulles, l'inductance 28 est isolée de la source 20 et du convertisseur 18 et les sorties des comparateurs 42 et 44 sont à haute impédance. A l'instant t0, la source 20 est allumée, la tension Vdd commence donc à augmenter et le système entre en initialisation (Reset). De plus, le signal d'horloge LOG CLK prend une valeur nulle et les sorties du comparateur 42 ne sont plus à haute impédance.

A un instant t1, la tension Vdd atteint le premier seuil. Cela est repéré par le comparateur COMP1. Cette information est utilisée par le convertisseur 18 qui connecte l'inductance 28 à la source 20 (Bypass) en maintenant l'interrupteur 31 fermé et l'interrupteur 33 ouvert. Le noeud V1 est donc alimenté directement par la source 20 et la tension V1 augmente. La capacité 30 est aussi chargée. De plus, les sorties du comparateur 44 ne sont plus à haute impédance.

A un instant t2, la tension V1 atteint le deuxième seuil. Le comparateur COMP2 prend donc la valeur haute. Après un retard par exemple causé par le temps d'initialisation du régulateur 34, la tension V2 commence à augmenter (instant t3). Cela conclut l'initialisation du système (Reset) qui entre alors en période d'attente (Wait Oscillator), correspondant à la durée d'initialisation de l'horloge des circuits numériques. A un instant t4, la tension V2 atteint la valeur minimale pour le fonctionnement des circuits numériques et le signal d'horloge LOG CLK devient non constant, ce qui signifie que les circuits numériques peuvent fonctionner. La tension V2 continue d'augmenter jusqu'à atteindre la tension voulue en sortie du régulateur 34, ici par exemple 1,2 V. La tension V2 peut varier au cours du fonctionnement sans modifier ni la tension V1, ni la tension de sortie (V3) du régulateur 32, et par exemple prendre la valeur 1,0 V.

Au premier coup d'horloge du signal LOG CLK, le système entre dans une période d'initialisation des circuits numériques (Init). A la fin de cette initialisation (instant t5), les circuits numériques fonctionnent (RUN). A un instant t6, une instruction, venant par exemple de l'utilisateur ou d'un programme, commande au convertisseur 18 d'arrêter de maintenir les interrupteurs 31 et 33 et de recommencer à fonctionner normalement. La valeur de la tension V1 diminue donc de la valeur de la tension fournie directement par la source 20 (ici par exemple 3,3 V) jusqu'à la valeur de la tension, découpée, fournie en sortie 24 par le convertisseur 18 (ici par exemple 1,4 V). Le système est dans un état de fonctionnement normal (RUN), c'est-à-dire que les circuits logiques et la mémoire sont suffisamment alimentés pour fonctionner, le noeud V1 est alimenté par le convertisseur 18 et le noeud V2 est alimenté par le régulateur 34.

L'instruction survient par exemple à la demande de l'unité de traitement 14, lorsque celle-ci a besoin d'effectuer une opération consommant de l'énergie ou d'activer une tâche effectuée par les circuits RF 12.

Un avantage du mode de réalisation décrit est qu'il est possible pour les circuits numériques d'être en fonctionnement avant la fin de la période d'initialisation du convertisseur 18. Durant cette période, entre les instants t5 et t6, l'alimentation est cependant moins efficace qu'après l'instant t6 à partir duquel V1 est alimenté par le convertisseur 18. La durée entre les instants t5 et t6 est par exemple comprise entre 1 µs et plusieurs millisecondes, par exemple entre 1 µs et 5 ms.

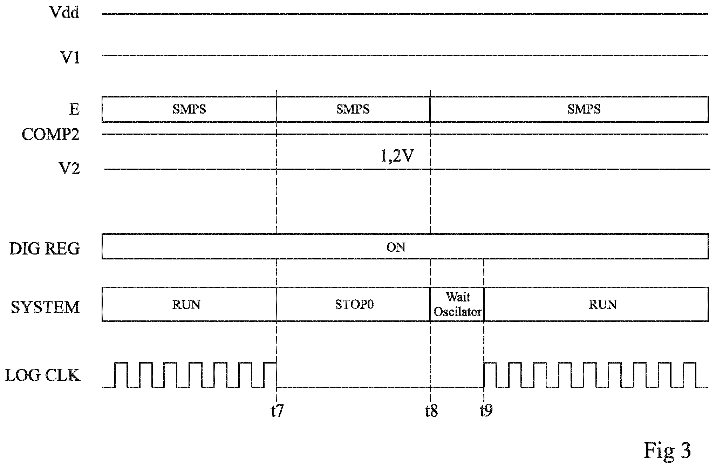

La figure 3 est un chronogramme illustrant un mode de fonctionnement du système de la figure 1.

A un instant t7, suivant par exemple l'instant t6, le système passe dans un premier mode de fonctionnement (STOP0) dit basse consommation, c'est-à-dire un mode de fonctionnement qui consomme moins que le mode de fonctionnement normal dans lequel le système entre à l'instant t6. Dans ce premier mode de fonctionnement basse consommation, l'unité de traitement 14 (et/ou les éventuels circuits logiques) n'est plus en fonctionnement, ce qui est représenté par la mise à zéro du signal d'horloge LOG CLK, mais sont toujours alimentés. Le convertisseur 18 et le régulateur 34 sont en fonctionnement et les mémoires volatiles sont toujours alimentées.

A un instant t8, le système se prépare à sortir du premier mode de fonctionnement basse consommation en commençant l'initialisation de l'horloge des circuits numériques. Après la période d'attente (Wait Oscillator), correspondant à la durée d'initialisation, le système est de nouveau (instant t9) en fonctionnement normal (RUN).

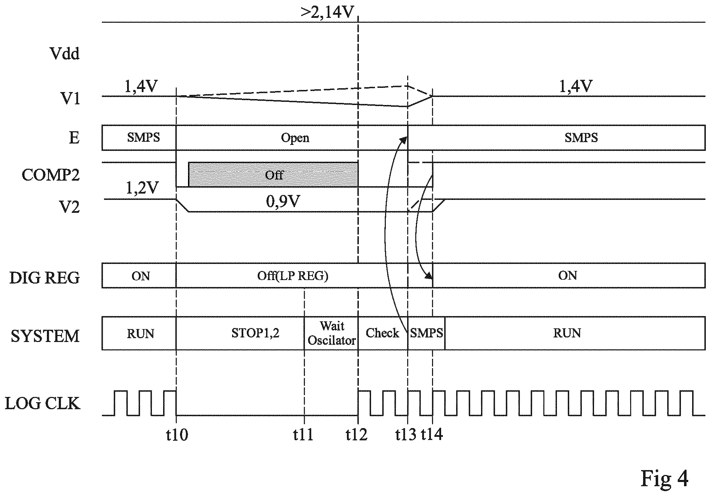

La figure 4 est un chronogramme illustrant un autre mode de fonctionnement du système de la figure 1.

A un instant t10, suivant par exemple l'instant t9 ou l'instant t6, le système passe en un deuxième (STOP1) ou un troisième (STOP2) mode de fonctionnement basse consommation. Pour cela, l'interrupteur 31 du convertisseur 18 est maintenu ouvert et l'interrupteur 33 du convertisseur 18 est maintenu ouvert. L'inductance 28 est donc isolée de la source 20 et de la sortie du convertisseur 18 (Open). Le noeud V1 est donc alimenté par la charge stockée dans la capacité 30. A cause des éléments parasites de l'alimentation, tels que les diodes de protection, non représentées, ainsi que de la résistance de fuite de la capacité 30, on peut observer une baisse de la tension V1. Ces mêmes phénomènes peuvent éventuellement entrainer une hausse de la tension V1 (courbe de tension V1 représentée en pointillés) dans le cas où il y a des fuites dans le reste du système qui viennent charger la capacité 30.

La sortie du comparateur 44 (COMP2) est à haute impédance (Off), de même que la sortie du comparateur 42 (COMP1), c'est-à-dire qu'ils sont arrêtés pour ne pas consommer d'énergie. Le régulateur 34 est aussi éteint à l'instant t10 (Off(LP REG)). Le noeud V2 est alors alimenté par le régulateur 40 (LP REG) qui reçoit à son entrée la tension Vdd fournie par la source 20 (par exemple 3,3 V) et fournit en sortie une tension par exemple inférieure à la tension V2 fournie par le régulateur 34 en fonctionnement normal. Par exemple, en fonctionnement normal, la tension V2 est sensiblement égale à 1,2, et dans les modes STOP1 et STOP2, la tension V2 est sensiblement égale à 0,9 V.

Dans ces deuxième et troisième modes de fonctionnement basse consommation, la mémoire 16 est alimentée. L'unité de traitement 14 (et/ou les éventuels circuits logiques) n'est plus en fonctionnement, ce qui est représenté par la mise à zéro du signal d'horloge LOG CLK. Dans le deuxième mode de fonctionnement basse consommation, l'unité de traitement 14 (et/ou les éventuels circuits logiques) est néanmoins alimentée, ce qui n'est pas le cas dans le troisième mode de fonctionnement.

A un instant t11, le système se prépare à sortir du deuxième ou du troisième mode de fonctionnement pour retourner en mode de fonctionnement normal. L'initialisation de l'horloge des circuits numériques (Wait Oscillator) commence donc à cet instant t11 et se termine à un instant t12. A l'instant t12, les circuits numériques sont de nouveau en fonctionnement et les comparateurs 42 et 44 (COMP1 et COMP2) sont allumés. Le comparateur 42 (COMP1) vérifie (Check) que la tension Vdd est supérieure au premier seuil (ici par exemple 2,14 V) et que le convertisseur 18 (SMPS) peut fonctionner normalement.

A un instant t13, l'inductance 28 n'est plus isolée du convertisseur 18 et le noeud V1 est alimenté à travers le convertisseur 18 (SMPS). La tension V1 va donc se rapprocher, en augmentant ou en diminuant, de la valeur de la tension de sortie du convertisseur 18 (ici, par exemple 1,4 V).

De plus, à l'instant t13, le comparateur 44 (COMP2) compare la valeur de la tension V1 au deuxième seuil.

Si la tension V1 est inférieure à ce deuxième seuil (trait plein), le système attend un instant t14 auquel la tension V1 atteint ce deuxième seuil avant de démarrer le régulateur 34 (DIG REG) et d'éteindre le régulateur 40 (LP REG). La tension V2 augmente, à partir de l'instant t14, jusqu'à atteindre une valeur de fonctionnement normal, par exemple 1,2 V. Le système est alors en fonctionnement normal (RUN).

Si la tension V1 est supérieure à ce deuxième seuil (trait pointillés), le régulateur 34 est directement allumé et le régulateur 40 est directement éteint. La tension V2 commence donc à augmenter dès l'instant t13.

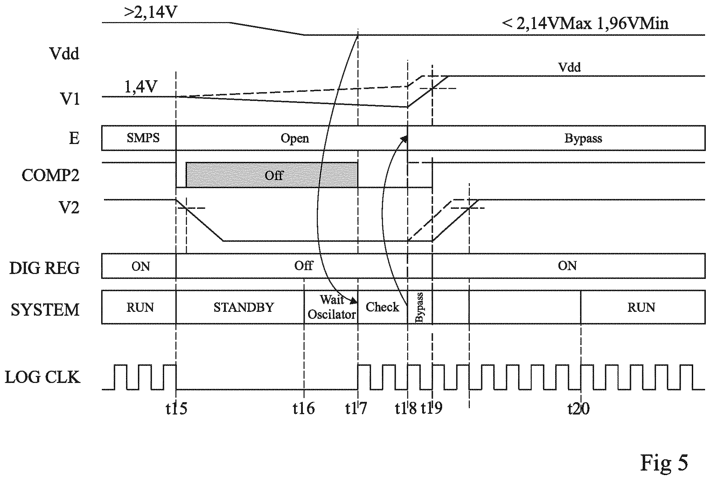

La figure 5 est un chronogramme illustrant un autre mode de fonctionnement du système de la figure 1.

A un instant t15, pouvant par exemple suivre l'instant t6, t9 ou t14, le système entre dans un quatrième mode de fonctionnement basse consommation (STANDBY). Dans ce mode de fonctionnement, les interrupteurs 31 et 33 sont maintenus ouverts de manière à isoler l'inductance 28 de la source 20 et du convertisseur 18 (Open). La tension V1 commence donc à augmenter ou diminuer comme décrit précédemment. Les comparateurs 42 et 44 (COMP1 et COMP2) sont éteints, de même que les régulateurs 34 (DIG REG) et 40 (LP REG). La tension V2 diminue donc jusqu'à être nulle et les circuits numériques sont éteints. Certains composants non représentés en figure 1 peuvent être allumés durant cette période, par exemple un oscillateur 32KHz (LES), un compteur constituant une horloge en temps réel (RTC), ainsi qu'une partie de la mémoire (32 KByte) qui est maintenue.

A un instant t16, l'initialisation de l'horloge des circuits numériques (Wait Oscillator) commence. Cette initialisation se termine à un instant t17, auquel les comparateurs COMP1 et COMP2 sont allumés et auquel les circuits numériques fonctionnent de nouveau.

Entre l'instant t17 et un instant t18, le comparateur COMP1 compare (Check) la valeur de la tension fournie par la source 20 au premier seuil. Dans l'exemple de la figure 5, le comparateur détermine que la tension Vdd a diminué entre l'instant t15 et l'instant t17. La tension Vdd est par exemple comprise entre 1,96 V et 2,14 V.

A l'instant t18, l'interrupteur 31 est fermé et l'interrupteur 33 est maintenu ouvert, de manière à alimenter le noeud V1 directement par la source 20 (Bypass). La tension V1 est alors comparée par le comparateur COMP2 au deuxième seuil.

Si la tension V1 est inférieure à ce deuxième seuil (trait plein), le système attend un instant t19 auquel la tension V1 atteint ce deuxième seuil avant de démarrer le régulateur 34 (DIG REG). La tension V2 commence alors à augmenter jusqu'à atteindre la valeur de tension de fonctionnement normale, par exemple 1,2 V.

Si la tension V1 est supérieure à ce deuxième seuil (trait pointillés), le régulateur 34 est directement allumé et la tension V2 commence directement à augmenter jusqu'à atteindre la valeur de tension de fonctionnement normal.

Dans les deux cas, la tension V1 augmente (dans l'exemple de la figure 5) ou diminue jusqu'à atteindre la valeur de la tension Vdd fournie par la source 20.

A un instant t20, le système est réinitialisé et les circuits numériques peuvent fonctionner normalement (RUN).

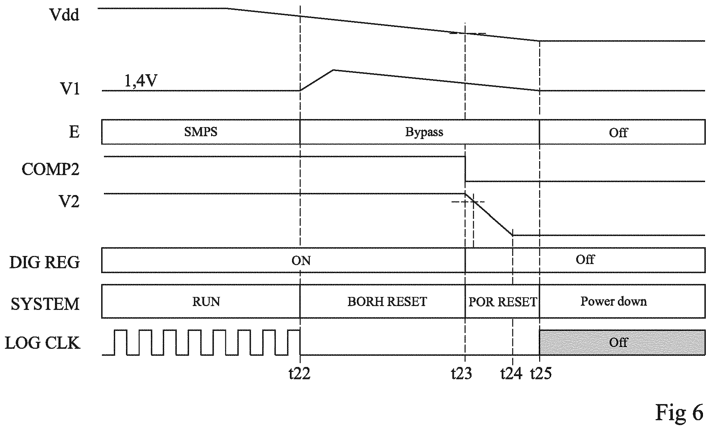

La figure 6 est un chronogramme illustrant un autre mode de fonctionnement du système de la figure 1.

A un instant t22 (BORH RESET), pouvant par exemple suivre l'instant t6, t9 ou t14, la tension Vdd fournie par la source 20 descend sous le premier seuil. Cette diminution de la tension est par exemple due à l'extinction de la source 20 ou à un dysfonctionnement de la source 20.

L'unité de traitement 14 (et/ou les éventuels circuits logiques) est éteinte. L'interrupteur 31 est maintenu fermé et l'interrupteur 33 est maintenu ouvert de manière à alimenter directement le noeud V1 par la source 20 (Bypass). La valeur de la tension V1 va donc progressivement devenir égale à la tension fournie par la source 20.

A un instant t23 (POR RESET), le comparateur COMP1 détermine que la tension Vdd fournie par la source 20 (et la tension V1) est inférieure à un troisième seuil, par exemple sensiblement égale à 1,7 V. Le régulateur 34 est alors éteint et la tension V2 diminue jusqu'à devenir nulle à un instant t24.

A un instant t25, la tension Vdd fournie par la source devient nulle et le système est éteint (Off, Power down).

Des modes de réalisation particuliers ont été décrits. Diverses variantes et modifications apparaîtront à l'homme de l'art. En particulier, la capacité 30 peut être remplacée par un autre type d'élément de stockage d'énergie.

Divers modes de réalisation avec diverses variantes ont été décrits ci-dessus. On notera que l'homme de l'art pourra combiner divers éléments de ces divers modes de réalisation et variantes dans le cadre des revendications.

## Revendications

1. Procédé de démarrage d'un système d'alimentation alimentant des circuits numériques (14, 16) et des circuits analogiques (12), comprenant :
un premier noeud (V1) adapté à être alimenté soit directement par une source d'application de tension (20) soit à travers une alimentation à découpage (18),
un premier régulateur linéaire (34) couplé entre les circuits numériques et le premier noeud,
un premier comparateur (42) adapté à comparer la valeur de la tension fournie par la source avec un premier seuil,
un deuxième comparateur (44) adapté à comparer la tension sur le premier noeud avec un deuxième seuil,
le procédé démarrage comprenant un mode de fonctionnement dans lequel le premier noeud est alimenté par l'alimentation à découpage, dans lequel le premier régulateur est en fonctionnement et dans lequel au moins une mémoire et au moins un circuit logique sont alimentés, le démarrage du système comprenant :
démarrer la source ;
lancer l'initialisation de l'alimentation à découpage ;
lorsque la tension fournie par la source est supérieure au premier seuil, connecter le noeud avec la source ;
démarrer le premier régulateur ;
lorsque la tension au noeud d'entrée du premier régulateur est supérieure au deuxième seuil, démarrer les circuits numériques ; et
lorsque l'alimentation à découpage est initialisée, connecter le premier noeud à la sortie de l'alimentation à découpage.

2. Procédé selon la revendication 1, dans lequel l'alimentation à découpage est alimentée par la source.

3. Procédé selon la revendication 1 ou 2, dans lequel le premier noeud est couplé à la sortie de l'alimentation à découpage par une inductance (28).

4. Procédé selon l'une quelconque des revendications 1 à 3, dans lequel le noeud est adapté à être alimenté par un élément de stockage d'énergie (30).

5. Procédé selon la revendication 4, dans lequel l'élément de stockage d'énergie (30) est une capacité couplée entre le premier noeud (V1) et la masse.

6. Procédé selon l'une quelconque des revendications 1 à 5, dans lequel les circuits numériques comprennent la au moins une mémoire (16) et le au moins un circuit logique ou une unité de traitement (14).

7. Procédé selon la revendication 6 dans son rattachement à la revendication 4, comprenant un mode de fonctionnement dans lequel le premier noeud est alimenté par l'élément de stockage d'énergie, le premier régulateur n'est pas en fonctionnement, un deuxième régulateur est en fonctionnement, et lesdits au moins une mémoire et un circuit logique sont alimentés.

8. Procédé selon la revendication 6 dans son rattachement à la revendication 4 ou selon la revendication 7, comprenant un mode de fonctionnement dans lequel le premier noeud est alimenté par l'élément de stockage d'énergie, le premier régulateur n'est pas en fonctionnement, le deuxième régulateur est en fonctionnement, ladite au moins une mémoire est alimentée, et ledit au moins un circuit logique n'est pas alimenté.

9. Procédé selon l'une quelconque des revendications 1 à 8, dans lequel le système d'alimentation comprend un deuxième régulateur linéaire (40) couplé entre la source et le noeud de sortie du premier régulateur.

10. Procédé selon l'une quelconque des revendications 1 à 9, dans lequel les circuits analogiques comprennent des circuits d'émission et/ou de réception d'ondes radio.

11. Procédé selon l'une quelconque des revendications 1 à 10, dans lequel le système d'alimentation comprend un troisième régulateur linéaire (32) couplé entre le premier noeud et les circuits analogiques.

12. Procédé selon l'une quelconque des revendications 1 à 11, dans lequel le démarrage du système comprend une étape durant laquelle le premier noeud est alimenté par la source, puis une étape durant laquelle le premier noeud est alimenté par la sortie de l'alimentation à découpage.

## Patentansprüche

1. Verfahren zum Starten eines Stromversorgungssystems, das digitale Schaltungen (14, 16) und analoge Schaltungen (12) versorgt, wobei das Verfahren Folgendes aufweist:
einen ersten Knoten (V1), der entweder direkt von einer Spannungsquelle (20) oder durch ein Schaltnetzteil (18) gespeist werden kann,
einen ersten linearen Regler (34), der zwischen den digitalen Schaltungen und den ersten Knoten gekoppelt ist,
einen ersten Komparator (42), der in der Lage ist, den Wert der von der Quelle gelieferten Spannung mit einem ersten Schwellenwert zu vergleichen,
einen zweiten Komparator (44), der in der Lage ist, die Spannung an dem ersten Knoten mit einem zweiten Schwellenwert zu vergleichen,
wobei das Verfahren zum Starten einen Betriebsmodus aufweist, bei dem der erste Knoten von dem Schaltnetzteil gespeist wird, bei dem der erste Regler läuft und bei dem wenigstens ein Speicher und wenigstens eine Logikschaltung gespeist werden, wobei das Starten des Systems Folgendes aufweist:
Starten der Quelle;
Beginnen der Initialisierung des Schaltnetzteils;
Verbinden des Knotens mit der Quelle, wenn die von der Quelle gelieferte Spannung größer ist als der erste Schwellenwert;
Starten des ersten Reglers;
Starten der digitalen Schaltungen, wenn die Spannung am Eingangsknoten des ersten Reglers größer ist als der zweite Schwellenwert; und
Verbinden des ersten Knotens mit dem Ausgang des Schaltnetzteils, wenn das Schaltnetzteil initialisiert ist.

2. Verfahren nach Anspruch 1, wobei das Schaltnetzteil von der Quelle gespeist wird.

3. Verfahren nach Anspruch 1 oder 2, wobei der erste Knoten über eine Induktivität (28) mit dem Ausgang des Schaltnetzteils verbunden ist.

4. Verfahren nach einem der Ansprüche 1 bis 3, wobei der Knoten durch ein Energiespeicherelement (30) gespeist werden kann.

5. Verfahren nach Anspruch 4, wobei das Energiespeicherelement (30) ein Kondensator ist, der zwischen dem ersten Knoten (V1) und Erde gekoppelt ist.

6. Verfahren nach einem der Ansprüche 1 bis 5, wobei die digitalen Schaltungen wenigstens einen Speicher (16) und wenigstens eine Logikschaltung oder eine Prozessoreinheit (14) aufweisen.

7. Verfahren nach Anspruch 6 in Abhängigkeit von Anspruch 4, aufweisend einen Betriebsmodus, bei dem der erste Knoten von dem Energiespeicherelement gespeist wird, der erste Regler nicht läuft, ein zweiter Regler läuft und der wenigstens eine Speicher und eine Logikschaltung gespeist werden.

8. Verfahren nach Anspruch 6 in Abhängigkeit von Anspruch 4 oder Verfahren nach Anspruch 7, aufweisend einen Betriebsmodus, bei dem der erste Knoten durch das Energiespeicherelement wird, der erste Regler nicht läuft, der zweite Regler läuft, der wenigstens eine Speicher gespeist wird und die wenigstens eine Logikschaltung nicht gespeist wird.

9. Verfahren nach einem der Ansprüche 1 bis 8, wobei das Stromversorgungssystem einen zweiten linearen Regler (40) aufweist, der zwischen die Quelle und den Ausgangsknoten des ersten Reglers geschaltet ist.

10. Verfahren nach einem der Ansprüche 1 bis 9, wobei die analogen Schaltungen Funkwellen-Sende- und/oder Empfangsschaltungen aufweisen.

11. Verfahren nach einem der Ansprüche 1 bis 10, wobei das Stromversorgungssystem einen dritten linearen Regler (32) aufweist, der zwischen den ersten Knoten und die analogen Schaltungen geschaltet ist.

12. Verfahren nach einem der Ansprüche 1 bis 11, wobei das Starten des Systems einen Schritt aufweist, bei dem der erste Knoten von der Quelle gespeist wird, gefolgt von einem Schritt, bei dem der erste Knoten vom Ausgang des Schaltnetzteils gespeist wird.

## Claims

1. A method for starting a power supply system powering digital circuits (14, 16) and analog circuits (12), comprising:
a first node (V1) capable of being powered either directly by a voltage application source (20) or through a switched-mode power supply (18),
a first linear regulator (34) coupled between the digital circuits and the first node,
a first comparator (42) capable of comparing the value of the voltage supplied by the source with a first threshold,
a second comparator (44) capable of comparing the voltage on the first node with a second threshold,
the method for starting comprising an operating mode where the first node is powered by the switched-mode power supply, where the first regulator is running, and where at least one memory and at least one logic circuit are powered, the starting of the system comprising:
starting the source;
launching the initialization of the switched-mode power supply;
when the voltage supplied by the source is greater than the first threshold, connecting the node to the source;
starting the first regulator;
when the voltage at the input node of the first regulator is greater than the second threshold, starting the digital circuits; and
when the switched-mode power supply is initialized, connecting the first node to the output of the switched-mode power supply.

2. The method of claim 1, wherein the switched-mode power supply is powered by the source.

3. The method of claim 1 or 2, wherein the first node is coupled to the output of the switched-mode power supply by an inductance (28).

4. The method of any of claims 1 to 3, wherein the node is capable of being powered by a power storage element (30).

5. The method of claim 4, wherein the power storage element (30) is a capacitor coupled between the first node (V1) and the ground.

6. The method of any of claims 1 to 5, wherein the digital circuits comprise at least one memory (16) and at least one logic circuit or one processing unit (14).

7. The method of claim 6 in its dependency of claim 4, comprising an operating mode where the first node is powered by the power storage element, the first regulator is not running, a second regulator is running, and said at least one memory and one logic circuit are powered.

8. The method of claim 6 in its dependency of claim 4 or the method of claim 7, comprising an operating mode where the first node is powered by the power storage element, the first regulator is not running, the second regulator is running, said at least one memory is powered, and said at least one logic circuit is not powered.

9. The method of any of claims 1 to 8, wherein the power supply system comprises a second linear regulator (40) coupled between the source and the output node of the first regulator.

10. The method of any of claims 1 to 9, wherein the analog circuits comprise radio wave transmit and/or receive circuits.

11. The method of any of claims 1 to 10, wherein the power supply system comprises a third linear regulator (32) coupled between the first node and the analog circuits.

12. The method of any of claims 1 to 11, wherein the starting of the system comprises a step during which the first node is powered by the source, followed by a step during which the first node is powered by the output of the switched-mode power supply.
